# EUROPEAN PATENT APPLICATION

(11) **EP 3 708 344 A1**
(43) Date of publication of application: **16.09.2020**
(21) Application number: 18888905.9
(22) Date of filing: 10.10.2018
(51) Int. Cl.: B29C 70/06, B29C 43/52, B29C 65/04

(54) **COMPOSITE MATERIAL FORMING METHOD AND COMPOSITE MATERIAL**

(30) Priority: 14.12.2017 JP 2017240016
(71) Applicant: Mitsubishi Heavy Industries, Ltd., Chiyoda-ku Tokyo 100-8332 (JP)
(72) Inventor: KAMO, Sota, Tokyo 108-8215 (JP); TAKAGI, Kiyoka, Tokyo 108-8215 (JP); TAKAYANAGI, Toshiyuki, Tokyo 108-8215 (JP)
(74) Representative: Henkel & Partner mbB
(86) International application number: PCT/JP2018/037750
(87) International publication number: WO 2019/116700

(57) **Abstract**

Provided are: a composite material forming method that makes it easy to use a composite material in combination with another member to which the composite material is bonded, said composite material being formed by reacting a resin; and a composite material. A composite material forming method according to the present invention comprises: a first material preparation step (a magnetic field circuit forming material preparation step S11), a second material preparation step (a magnetic field circuit non-forming material preparation step S12), a material assembly step S13, and a first heating step (a magnetic field heating step S14). In the first material preparation step, a first material that contains a first resin is prepared. In the second material preparation step, a second material that contains a second resin is prepared. In the material assembly step S13, the first material and the second material are assembled. In the first heating step, the assembled first and second materials are heated under such conditions where the first resin is mainly reacted in comparison to the second resin, so that the first resin is mainly reacted in comparison to the second resin, thereby bonding the first material and the second material with each other.

## Description

### Technical Field

The present invention relates to a composite material forming method and a composite material.

### Background Art

As a material having lightness and high strength, a composite material including a reinforcing fiber and a resin is known. The composite material is used for an aircraft, an automobile, a ship, or the like. As a method of producing a composite material, a method is known, the method including: laminating a sheet of a composite material including a reinforcing fiber and a resin; applying a magnetic field for heating in a state where the laminated sheet is pressurized such that the resin reacts (refer to PTL 1).

### Citation List

### Patent Literature

[PTL 1] Japanese Unexamined Patent Application Publication No. 2014-116293

### Summary of Invention

### Technical Problem

After pressurizing and heating the laminated sheet of the composite material such that the resin reacts for forming, the composite material is used in a state where it is joined to another member in many cases. In this case, in order to join the composite material to the member, a part of another resin different from the resin to react for forming is caused to react. However, in the method described in PTL 1, a resin to react cannot be selected. Therefore, there is a problem in that it is difficult to use the composite material that is formed by causing the resin to react in a state where it is joined to another member.

The present invention has been made in consideration of the above-described circumstances, and an object thereof is to provide a composite material forming method capable of easily using a composite material that is formed by causing a resin to react in a state where it is joined to another member; and a composite material.

### Solution to Problem

In order to solve the above-described problems and to achieve the object, there is provided a composite material forming method including: a first material preparation step of preparing a first material including a first reinforcing fiber and a first resin; a second material preparation step of preparing a second material including a second reinforcing fiber and a second resin; a material assembly step of assembling the first material and the second material to each other, and a first heating step of joining the first material and the second material to each other by heating the first material and the second material assembled in the material assembly step under a condition where the first resin reacts more predominantly than the second resin such that the first resin reacts more predominantly than the second resin.

With this configuration, by performing heating under a predetermined condition using the first material including the first resin that reacts under the predetermined condition and the second material including the second resin that is less likely to react under the predetermined condition, the first resin reacts more predominantly than the second resin, and the state where the second resin is less likely to react can be maintained. Therefore, the composite material that is formed by causing the first resin to react can be easily used in a state where it is joined to another member in the portion of the second material including the second resin. Further, only the heated portion has to be pressurized, and thus a mold relating to forming can be simplified.

In this configuration, it is preferable that the first material preparation step is a magnetic field circuit forming material preparation step of preparing a magnetic field circuit forming material in which a magnetic field circuit is formed as the first material, the second material preparation step is a magnetic field circuit non-forming material preparation step of preparing a magnetic field circuit non-forming material in which a magnetic field circuit is not formed as the second material, and the first heating step is a magnetic field heating step of applying a magnetic field for heating as the condition where the first resin reacts more predominantly than the second resin. With this configuration, by applying a magnetic field for heating to the magnetic field circuit forming materials that is heated by the magnetic field and the magnetic field circuit non-forming material that is not heated by the magnetic field such that the first resin included in the magnetic field circuit forming materials reacts more predominantly than the second resin included in the magnetic field circuit non-forming material, a state where the second resin included in the magnetic field circuit non-forming material is less likely to react can be favorably maintained. Therefore, the composite material that is formed by causing the first resin to react can be easily used in a state where it is joined to another member in the portion of the magnetic field circuit non-forming material including the second resin. Further, only the heated portion has to be pressurized, and thus a mold relating to forming can be simplified.

In addition, in the initially described configuration, it is preferable that the composite material forming method further includes: a second heating preparation step of disposing a heat generating material in the second material to heat the second material under a condition where the second resin reacts more predominantly than the first resin; and a second heating step of processing the second material along a member different from the first material and the second material to join the second material to the member by heating the second material in which the heat generating material is disposed in the second heating preparation step under a condition where the second resin reacts more predominantly than the first resin such that the second resin reacts more predominantly than the first resin. With this configuration, the heat generating material is disposed in the second material, and then heating is performed under a condition where the second resin reacts more predominantly than the first resin. As a result, by causing the second resin included in the second material to react more predominantly than the first resin included in the first material in a state where the first resin included in the first material is less likely to react, the second material can be joined to another member. Therefore, the composite material that is formed by causing the first resin to react can be more easily used in a state where it is joined to another member in the portion of the second material including the second resin. Further, only the heated portion has to be pressurized, and thus a mold relating to joining to another member can be simplified.

In the previously described configuration, it is preferable that the first material preparation step is a magnetic field circuit forming material preparation step of preparing a magnetic field circuit forming material in which a magnetic field circuit is formed as the first material, the second material preparation step is a magnetic field circuit non-forming material preparation step of preparing a magnetic field circuit non-forming material in which a magnetic field circuit is not formed as the second material, the first heating step is a magnetic field heating step of applying a magnetic field for heating as the condition where the first resin reacts more predominantly than the second resin, the second heating preparation step is an electric field heating preparation step of disposing an electromagnetic field heat generating body such as metal as the heat generating material to apply an electric field for heating as the condition where the second resin reacts more predominantly than the first resin, and the second heating step is an electric field heating step of applying an electric field for heating as the condition where the second resin reacts more predominantly than the first resin. With this configuration, the electromagnetic field heat generating body such as metal is disposed in the magnetic field circuit non-forming material, and an electric field is applied for heating. As a result, by causing the second resin included in the magnetic field circuit non-forming material to react more predominantly than the first resin included in the magnetic field circuit forming material in a state where the first resin included in the magnetic field circuit forming material is less likely to react, the magnetic field circuit non-forming material can be favorably joined to another member. Therefore, the composite material that is formed by causing the first resin to react can be more easily used in a state where it is joined to another member in the portion of the magnetic field circuit non-forming material including the second resin. Further, only the heated portion has to be pressurized, and thus a mold relating to joining to another member can be simplified.

In these configurations, it is preferable that in the second material preparation step, the second material including the second resin having a higher reaction temperature than the first resin is prepared, and in the first heating step, the first material and the second material are heated at a temperature that is higher than or equal to the reaction temperature of the first resin and lower than the reaction temperature of the second resin. With this configuration, by applying a magnetic field for heating such that the first resin included in the magnetic field circuit forming material reacts more predominantly than the second resin included in the magnetic field circuit non-forming material, a state where the second resin included in the magnetic field circuit non-forming material less likely to react can be easily maintained. Therefore, the composite material that is formed by causing the first resin to react can be more easily used in a state where it is joined to another member in the portion of the magnetic field circuit non-forming material including the second resin.

In these configurations, it is preferable that, in the material assembly step, the first material and the second material are disposed along a longitudinal direction and assembled. With this configuration, regarding the composite material having a shape in which it is difficult to heat only the portion in which the first material including the first resin is disposed, the composite material that is formed by causing the first resin to react can be easily used in a state where it is joined to another member in the portion of the second material including the second resin, and a mold relating to forming can be simplified.

In order to solve the above-described problems and to achieve the object, there is provided a composite material including: a first material including a first reinforcing fiber and a first resin; a second material including a second reinforcing fiber and a second resin, in which a condition where the first resin reacts more predominantly than the second resin is satisfied, and the first material and the second material are joined along a longitudinal direction by being disposed along the longitudinal direction and assembled.

With this configuration, by causing the first resin included in the first material to react more predominantly than the second resin included in the second material, a state where the second resin included in the second material is less likely to react can be maintained. Therefore, the composite material that is formed by causing the first resin to react can be easily used in a state where it is joined to another member in the portion of the second material including the second resin, and a mold relating to joining to another member can be simplified.

In this configuration, it is preferable that the first material is a magnetic field circuit forming material in which a magnetic field circuit is formed, and the second material is a magnetic field circuit non-forming material in which a magnetic field circuit is not formed. With this configuration, by causing the first resin included in the magnetic field circuit forming material to react more predominantly than the second resin included in the magnetic field circuit non-forming material, a state where the second resin included in the magnetic field circuit non-forming material less likely to react can be favorably maintained. Therefore, the composite material that is formed by causing the first resin to react can be easily used in a state where it is joined to another member in the portion of the magnetic field circuit non-forming material including the second resin, and a mold relating to joining to another member can be simplified.

In order to solve the above-described problems and to achieve the object, there is provided a composite material including: a first material including a first reinforcing fiber and a first resin; a second material including a second reinforcing fiber and a second resin; and a member different from the first material and the second material, in which a condition where the first resin reacts more predominantly than the second resin is satisfied, the first material and the second material are joined along a longitudinal direction by being disposed along the longitudinal direction and assembled, and the second material and the member are joined along the longitudinal direction.

With this configuration, by causing the second resin included in the second material to react more predominantly than the first resin included in the first material in a state where the first resin included in the first material is inhibited from reacting again more predominantly than the second resin included in the second material, the second material including the second resin can be joined to another member. Therefore, the composite material that is formed by causing the first resin to react can be easily used in a state where it is joined to another member in the portion of the second material including the second resin, and a mold relating to joining to another member can be simplified.

In this configuration, it is preferable that the first material is a magnetic field circuit forming material in which a magnetic field circuit is formed, and the second material is a magnetic field circuit non-forming material in which a magnetic field circuit is not formed. With this configuration, by causing the second resin included in the magnetic field circuit non-forming material to react more predominantly than the first resin included in the magnetic field circuit forming material in a state where the first resin included in the magnetic field circuit forming material is inhibited from reacting again more predominantly than the second resin included in the magnetic field circuit non-forming material, the magnetic field circuit non-forming material including the second resin can be favorably joined to another member. Therefore, the composite material that is formed by causing the first resin to react can be easily used in a state where it is joined to another member in the portion of the magnetic field circuit non-forming material including the second resin, and a mold relating to joining to another member can be simplified.

### Advantageous Effects of Invention

According to the present invention, it is possible to provide a composite material forming method capable of easily using a composite material that is formed by causing a resin to react in a state where it is joined to another member; and a composite material.

### Brief Description of Drawings

Fig. 1 is a flowchart illustrating a composite material forming method according to an embodiment of the present invention.
Fig. 2 is a diagram illustrating a magnetic field circuit forming material preparation step, a magnetic field circuit non-forming material preparation step, a material assembly step, and a magnetic field heating step of Fig. 1.
Fig. 3 is a schematic diagram illustrating an example of a composite material according to an embodiment of the present invention that is formed through the steps including up to the magnetic field heating step of Fig. 1.
Fig. 4 is a diagram illustrating an electric field heating preparation step and an electric field heating step.
Fig. 5 is a schematic diagram illustrating an example of the composite material according to the embodiment of the present invention that is formed through the steps including up to the electric field heating step of Fig. 1.

### Description of Embodiments

Hereinafter, an embodiment of the present invention will be described in detail based on the drawings. The present invention is not limited to this embodiment. In addition, components in the embodiment include components that can be easily replaced and conceived by those skilled in the art or substantially the same components. Further, components described below can be appropriately combined with each other.

### [Embodiment]

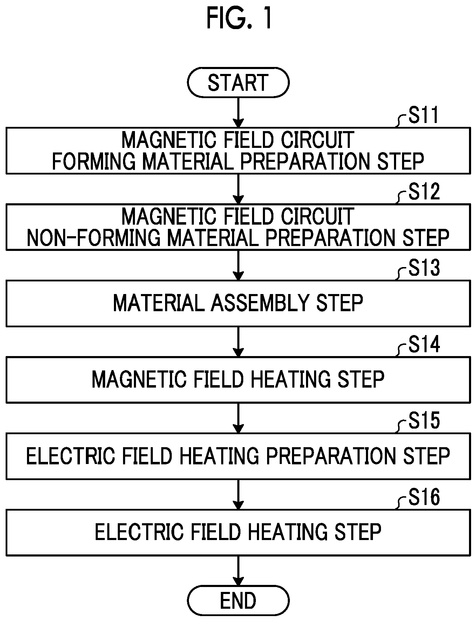

Fig. 1 is a flowchart illustrating a composite material forming method according to an embodiment of the present invention. As illustrated in Fig. 1, the composite material forming method according to the embodiment of the present invention includes a magnetic field circuit forming material preparation step S11 as a first material preparation step, a magnetic field circuit non-forming material preparation step S12 as a second material preparation step, a material assembly step S13, a magnetic field heating step S14 as a first heating step, an electric field heating preparation step S15 as a second heating preparation step, and an electric field heating preparation step S16 as a second heating preparation step.

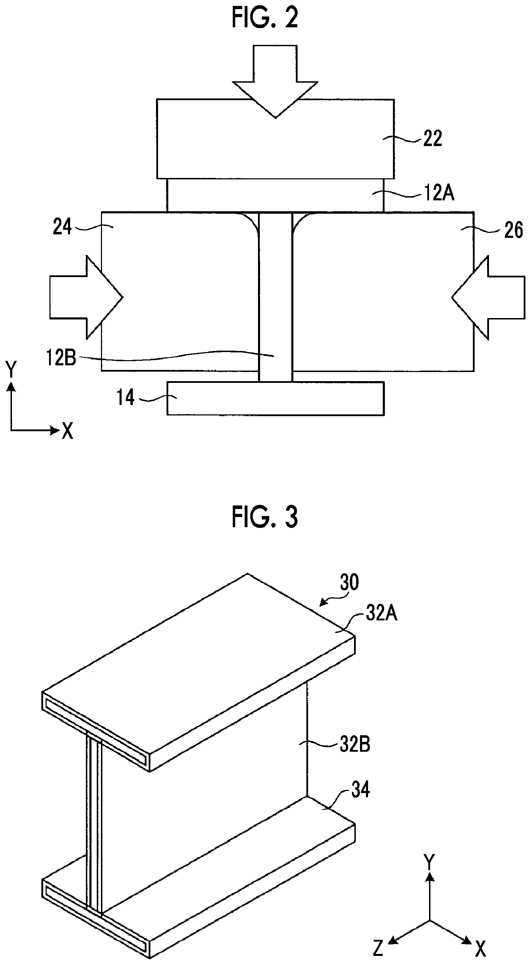

Fig. 2 is a diagram illustrating the magnetic field circuit forming material preparation step S11, the magnetic field circuit non-forming material preparation step S12, the material assembly step S13, and the magnetic field heating step S14 of Fig. 1. In the first material preparation step, a first material as a composite material including a first reinforcing fiber and a first resin is prepared. In the magnetic field circuit forming material preparation step S11, magnetic field circuit forming materials 12A and 12B in which a magnetic field circuit is formed as a heat generating mechanism are prepared as the first material.

The first reinforcing fiber included in the magnetic field circuit forming materials 12A and 12B have electrical conductivity and form a circuit in the magnetic field circuit forming materials 12A and 12B. Therefore, when a magnetic field is applied to the first reinforcing fiber included in the magnetic field circuit forming materials 12A and 12B in the magnetic field heating step S14 described below, an eddy current is induced in the first reinforcing fiber. As a result, heat is generated by electric resistance of the first reinforcing fiber. That is, in the magnetic field circuit forming materials 12A and 12B, the magnetic field circuit that can induce an eddy current is formed by the first reinforcing fiber, and heat is generated according to a magnetic field. Heat generated from the magnetic field circuit formed in the magnetic field circuit forming materials 12A and 12B is transferred to the first resin included in the magnetic field circuit forming materials 12A and 12B, which contributes to a reaction of the first resin.

The magnetic field circuit forming materials 12A and 12B have lightness and high strength. In the embodiment, the first reinforcing fiber included in the magnetic field circuit forming materials 12A and 12B is, for example, carbon fiber. However, the first reinforcing fiber is not limited to a carbon fiber and may be another metallic fiber. In addition, regarding a portion of the first reinforcing fiber not relating to the magnetic field circuit, a non-metallic fiber such as a glass fiber or a plastic fiber may also be used.

Examples of the first resin included in the magnetic field circuit forming materials 12A and 12B include a thermoplastic resin in which a thermofusion reaction occurs when heated and a thermosetting resin that enters a cured state from a softened state or a semi-cured state through a thermosetting reaction when heated. Hereinafter, regarding the first resin included in the magnetic field circuit forming materials 12A and 12B, when it is not necessary to distinguish between a thermoplastic resin and a thermosetting resin, the thermofusion reaction of the thermoplastic resin and the thermosetting reaction of the thermosetting resin will be simply referred to as "reaction".

When the first resin included in the magnetic field circuit forming materials 12A and 12B is a thermoplastic resin in the embodiment, examples of the first resin include a polyamide resin, a polypropylene resin, an acrylonitrile butadiene styrene (ABS) resin, polyether ether ketone (PEEK), polyether ketone ketone (PEKK), and polyphenylene sulfide (PPS).

When the first resin included in the magnetic field circuit forming materials 12A and 12B is a thermosetting resin in the embodiment, examples of the first resin include a resin having an epoxy resin. When the resin included in the magnetic field circuit forming materials 12A and 12B has an epoxy resin, the resin is lighter and has higher strength, which is preferable. When the first resin included in the magnetic field circuit forming materials 12A and 12B is a thermosetting resin in the embodiment, other examples of the first resin include a polyester resin and a vinyl ester resin. However, the first resin included in the magnetic field circuit forming materials 12A and 12B is not limited to the examples and may be other resins.

Specific examples of the magnetic field circuit forming materials 12A and 12B include a preform material in which a preform obtained by three-dimensionally weaving a reinforcing fiber is impregnated with a thermoplastic resin, a commingled material in which a reinforcing fiber and a thermoplastic resin fiber are mixed and spun, a commingled knitted material in which a reinforcing fiber and a thermoplastic resin fiber are knitted and woven, a prepreg in which a reinforcing fiber is impregnated with a thermoplastic resin or a thermosetting resin, and a semi-cured or cured material in which a reinforcing fiber is impregnated with a thermosetting resin. In the magnetic field circuit forming materials 12A and 12B, the form of the magnetic field circuit can be adjusted depending on the arrangement state or weaving method of the reinforcing fiber. As a result, the amount of heat generated according to a magnetic field can be adjusted.

In the second material preparation step, a second material as a composite material including a second reinforcing fiber and a second resin is prepared. In the magnetic field circuit non-forming material preparation step S12, a magnetic field circuit non-forming material 14 in which a magnetic field circuit is not formed is prepared as the second material.

The second reinforcing fiber included in the magnetic field circuit non-forming material 14 does not have electrical conductivity. Alternatively, the second reinforcing fiber has electrical conductivity, but a circuit is not formed in the magnetic field circuit non-forming material 14. Therefore, even when a magnetic field is applied to the second reinforcing fiber included in the magnetic field circuit non-forming material 14 in the magnetic field heating step S14 described below, an eddy current is less likely to be induced than in the first material. Therefore, even when heat is generated, the amount of heat generated is less than in the first material. That is, in the magnetic field circuit non-forming material 14, the formation of a magnetic field circuit that can induce an eddy current is inhibited by the second reinforcing fiber, and the amount of heat generated according to a magnetic field is less than that in the first material.

The magnetic field circuit non-forming material 14 has lightness and higher strength. As the second reinforcing fiber included in the magnetic field circuit non-forming material 14, the same fiber material as the first reinforcing fiber included in the magnetic field circuit forming materials 12A and 12B is favorably used, but the second reinforcing fiber is not limited thereto. For example, a fiber material not having electrical conductivity such as a glass fiber or a plastic fiber as a non-metallic fiber may also be used.

As the second resin included in the magnetic field circuit non-forming material 14, the same resin as the first resin included in the magnetic field circuit forming materials 12A and 12B is favorably used. It is preferable that the second resin included in the magnetic field circuit non-forming material 14 has a higher reaction temperature than the first resin included in the magnetic field circuit forming materials 12A and 12B. In this case, when the first resin included in the magnetic field circuit forming materials 12A and 12B as the first material is caused to react, a state where the second resin included in the magnetic field circuit non-forming material 14 as the second material is less likely to react than the first resin included in the magnetic field circuit forming materials 12A and 12B as the first material can be more easily maintained.

Specific preferable examples of the magnetic field circuit non-forming material 14 include a resin-coated material in which a reinforcing fiber is coated with a resin and a resin-covered material in which a bundle of reinforcing fibers is covered with a resin.

As a result, a condition of applying a magnetic field for heating is satisfied between the magnetic field circuit forming materials 12A and 12B and the magnetic field circuit non-forming material 14 as the condition where the first resin included in the magnetic field circuit forming materials 12A and 12B reacts more predominantly than the second resin included in the magnetic field circuit non-forming material 14. Here, the first resin reacting more predominantly represents that the reaction of the first resin is more likely to occur and the reaction of the second resin is less likely to occur. Specifically, the first resin accounts for at least 80% or higher, preferably 90% or higher, and more preferably 95% or higher with respect to the total mass of the resins that reacts. In addition, the magnetic field circuit forming materials 12A and 12B and the magnetic field circuit non-forming material 14 can be maintained in a state where the second resin included in the magnetic field circuit non-forming material 14 is less likely to react than the first resin included in the magnetic field circuit forming materials 12A and 12B. Here, the second resin being less likely to react than the first resin represents that the reaction of the first resin is more likely to occur and the reaction of the second resin is less likely to occur such that an unreacted portion of the second resin remains. Specifically, the unreacted portion accounts for at least 80% or higher, preferably 90% or higher, and more preferably 95% or higher with respect to the total mass of the second resin.

The first material and the second material may be in any form as long as they satisfies the condition where the first resin reacts more predominantly than the second resin included in the second material. The first material and the second material may be in a form in which the first material is the same as the material of the magnetic field circuit forming materials 12A and 12B, the amount of the same magnetic field circuit as that of the magnetic field circuit forming materials 12A and 12B in the second material is less than that of the first material, and the condition where the first resin reacts more predominantly than the second resin included in the second material is satisfied.

In addition, another preferable form of the first material and the second material may be a form in which the first material includes a heat generating body that is mixed in the first resin and generates heat under a predetermined condition instead of the magnetic field circuit and the second material does not include a heat generating body that generates heat under a predetermined condition in the second resin. In addition, the first material and the second material may be in a form in which the first material includes a first heat generating body that is mixed in the first resin and generates heat under a first condition instead of the magnetic field circuit, the second material includes a second heat generating body that is mixed in the second resin and generates heat under a first condition different from the first condition, and a condition where the first heat generating body reacts more predominantly than the second heat generating body is satisfied. Alternatively, In addition, the first material and the second material may be in a form in which the first material includes a heat generating body that is mixed in the first resin and generates heat under a predetermined condition instead of the magnetic field circuit, the second material includes a heat generating body that is mixed in the second resin and generates heat under a predetermined condition, and a condition where the amount of heat generated from the heat generating body mixed in the first resin is more than that of the heat generating body mixed in the second resin and the first resin reacts more predominantly than the second resin is satisfied. When the condition where the first resin reacts more predominantly than the second resin is satisfied due to the heat generating bodies, it is not necessary that the first reinforcing fiber form the magnetic field circuit. Therefore, a non-metallic fiber may be used as a whole.

Examples of the heat generating body included in the first material or the second material include an electromagnetic field heat generating body such as iron powder or metal that generates heat when a magnetic field is applied thereto. Here, when an electric field is applied to the electromagnetic field heat generating body such as metal in a predetermined direction, the molecular momentum increases such that heat generation is induced in the electromagnetic field heat generating body such as metal. In addition, when a magnetic field is applied to the electromagnetic field heat generating body such as metal in a direction perpendicular to the predetermined direction, a current is generated in the electromagnetic field heat generating body such that heat is generated by electric resistance of the electromagnetic field heat generating body such as metal. Likewise, the electromagnetic field heat generating body such as metal absorbs an electromagnetic wave and generates heat. It is preferable that the electromagnetic field heat generating body such as metal is provided as a sheet of the electromagnetic field heat generating body such as metal that is applied by scattering the electromagnetic field heat generating body in a solution and blowing the solution. By locally or partially distributing the electromagnetic field heat generating body such as metal, local or partial heating can be accurately performed.

In addition, still another preferable form of the first material and the second material may be a form in which the first material and the second material do not include the magnetic field circuit and the heat generating body and the reaction temperature of the first resin included in the first material is lower than that of the second resin included in the second material.

Further, still another preferable form of the first material and the second material may be a form in which the respective conditions of the magnetic field circuit, the respective conditions of the heat generating body, and the respective conditions relating to the reaction temperatures of the first resin and the second resin are appropriately combined.

In the material assembly step S13, the first material and the second material are assembled. In the embodiment, specifically, the magnetic field circuit forming materials 12A and 12B and the magnetic field circuit non-forming material 14 are assembled. In the material assembly step S13, for example, as illustrated in Fig. 2, the magnetic field circuit forming materials 12A and 12B and the magnetic field circuit non-forming material 14 are disposed along a Z-axis direction as a longitudinal direction and assembled, the Z-axis direction being perpendicular to the plane in Fig. 2.

In this case, in the material assembly step S13, specifically, as illustrated in Fig. 2, the plate-shaped magnetic field circuit forming material 12A is disposed along an in-plane direction perpendicular to a Y-axis direction as a vertical direction. In addition, in the material assembly step S13, the plate-shaped magnetic field circuit forming material 12B is disposed along an in-plane direction perpendicular to an X direction as one horizontal direction, and one end surface of the plate-shaped magnetic field circuit forming material 12B on a first side (upper side in Fig. 2) in the Y-axis direction is brought into contact with the magnetic field circuit forming material 12A to form a contact surface extending in the Z-axis direction. Further, in the material assembly step S13, the plate-shaped magnetic field circuit non-forming material 14 is disposed along an in-plane direction perpendicular to the Y-axis direction as the vertical direction and is brought into contact with an end surface of the plate-shaped magnetic field circuit forming material 12B on a second side (lower side in Fig. 2) in the Y-axis direction to form a contact surface extending in the Z-axis direction. That is, in the material assembly step S13, the magnetic field circuit forming materials 12A and 12B and the magnetic field circuit non-forming material 14 are assembled such that the end surfaces of the plate-shaped magnetic field circuit forming material 12B on both sides in the Y-axis direction are interposed between the plate-shaped magnetic field circuit forming material 12A and the plate-shaped magnetic field circuit non-forming material 14.

The details of the material assembly step S13 vary depending on the shapes of the pair of magnetic field circuit forming materials and the magnetic field circuit non-forming material. In the material assembly step S13, in addition to the above-described case, when cross-sections of the pair of magnetic field circuit forming materials perpendicular to the Z-axis direction have a C-shape and the magnetic field circuit non-forming material has a plate shape, portions of the pair of magnetic field circuit forming materials along the Y-axis direction are aligned and brought into contact with each other to be assembled, a filler is inserted into a gap between the pair of magnetic field circuit forming materials, and the surfaces of the pair of magnetic field circuit forming materials on the second side (lower side) in the Y-axis direction and the filler are brought into contact with each other to be assembled with the magnetic field circuit non-forming material as a cap such that a contact surface extending in the Z-axis direction is formed. In this state, the cross-sections perpendicular to the Z-axis direction have a I-shape as a whole.

In the first heating step, the first material and the second material are joined to each other by heating the first material and the second material assembled in the material assembly step S13 under a condition where the first resin reacts more predominantly than the second resin such that the first resin reacts more predominantly than the second resin. In the embodiment, in the magnetic field heating step S14 as the first heating step, the magnetic field circuit forming materials 12A and 12B and the magnetic field circuit non-forming material 14 are joined to each other by applying a magnetic field for heating to the magnetic field circuit forming materials 12A and 12B as the first material and the magnetic field circuit non-forming material 14 as the second material assembled in the material assembly step S13 as the above-described condition such that the first resin included in the magnetic field circuit forming materials 12A and 12B reacts more predominantly than the second resin included in the magnetic field circuit non-forming material 14.

In the magnetic field heating step S14, as illustrated in Fig. 2, pressure heating devices 22, 24, and 26 that apply a magnetic field for heating while pressurizing the magnetic field circuit forming materials 12A and 12B are used. In the magnetic field heating step S14, specifically, as illustrated in Fig. 2, the pressure heating device 22 applies a magnetic field for heating while interposing the first side (in Fig. 2, the left side) of the magnetic field circuit forming material 12A with respect to the magnetic field circuit forming material 12B between the pressure heating device 22 and the pressure heating device 24 for pressurization. In addition, in the magnetic field heating step S14, the pressure heating device 22 applies a magnetic field for heating while interposing the second side (in Fig. 2, the right side) of the magnetic field circuit forming material 12A with respect to the magnetic field circuit forming material 12B between the pressure heating device 22 and the pressure heating device 26 for pressurization. Further, in the magnetic field heating step S14, a magnetic field is applied for heating between the pressure heating device 24 and the pressure heating device 26 while interposing the magnetic field circuit forming material 12B between the pressure heating device 24 and the pressure heating device 26 for pressurization.

In the magnetic field heating step S14, by causing the first resin included in the magnetic field circuit forming materials 12A and 12B to react with each other, the magnetic field circuit forming material 12A and the magnetic field circuit forming material 12B are joined to each other on the end surface of the magnetic field circuit forming material 12B on the first side in the Y-axis direction. In addition, in the magnetic field heating step S14, by causing the first resin included in the magnetic field circuit forming material 12B to react with each other, the magnetic field circuit forming material 12B and the magnetic field circuit non-forming material 14 are joined to each other on the end surface of the magnetic field circuit forming material 12B on the second side in the Y-axis direction.

In the magnetic field heating step S14, when the reaction temperature of the second resin included in the magnetic field circuit non-forming material 14 is higher than that of the first resin included in the magnetic field circuit forming materials 12A and 12B, it is preferable that the pressure heating devices 22, 24, and 26 perform heating at a temperature that is higher than or equal to the reaction temperature of the first resin included in the magnetic field circuit forming materials 12A and 12B and lower than the reaction temperature of the second resin included in the magnetic field circuit non-forming material 14. In this case, by causing the first resin included in the magnetic field circuit forming materials 12A and 12B to react more predominantly than the second resin included in the magnetic field circuit non-forming material 14, a state where the second resin included in the magnetic field circuit non-forming material 14 is less likely to react than the first resin included in the magnetic field circuit forming materials 12A and 12B can be more easily maintained.

The pressure heating devices 22, 24, and 26 include a pressure cylinder (not illustrated) and alternating magnetic field application member (not illustrated) that are controlled by a control unit (not illustrated). The pressure heating devices 22, 24, and 26 pressurize the magnetic field circuit forming materials 12A and 12B and the magnetic field circuit non-forming material 14 using the pressure cylinder (not illustrated) preferably at 50 kPa to 10 MPa and more preferably at 50 kPa to 3000 kPa. It is preferable that the pressure heating devices 22, 24, and 26 applies a high-frequency magnetic field of 900 kHz or higher to the alternating magnetic field application member (not illustrated) to heat the magnetic field circuit forming materials 12A and 12B. It is preferable that the pressure heating devices 22, 24, and 26 exhibit sufficient pressure resistance and heat resistance for the pressurization and heating in the magnetic field heating step S14 and the pressure heating devices 22, 24, and 26 are protected with a material that is transparent to the generated magnetic field, for example, a material such as a PEEK resin or a ceramic.

In the magnetic field heating step S14, by causing the first resin included in the magnetic field circuit forming materials 12A and 12B to react more predominantly than the second resin included in the magnetic field circuit non-forming material 14, a state where the second resin included in the magnetic field circuit non-forming material 14 is less likely to react than the first resin included in the magnetic field circuit forming materials 12A and 12B can be maintained. Further, in the magnetic field heating step S14, only the heated portion has to be pressurized. For example, as in the rectangular shape of the pressure heating devices 22, 24, and 26, a mold relating to forming can be simplified.

The details of the first heating step vary depending on the form of the first material and the second material. For example, in the first heating step, in the form where the first material and the second material satisfy the condition where the first resin reacts more predominantly than the second resin included in the second material due to the heat generating body, the first material and the second material are joined to each other by causing the heat generating body to generate heat under the above-described predetermined condition such that the first resin reacts more predominantly than the second resin. Here, the predetermined condition determines depending on the heat generating body, for example, application of a predetermined magnetic field, application of a predetermined electric field, or irradiation of a predetermined electromagnetic wave. In these cases, in the first heating step, as a heating device, a magnetic field application device that applies a magnetic field, an electric field application device that applies an electric field, or an electromagnetic wave irradiation device that irradiates an electromagnetic wave can be appropriately used depending on the respective heating forms.

In addition, in the first heating step, in the form where the first material and the second material satisfy the condition where the first resin reacts more predominantly than the second resin included in the second material due to the reaction temperatures of the first resin and the second resin, the first material and the second material are joined to each other by heating the first resin at a temperature at which the first resin reacts more predominantly than the second resin such that the first resin reacts more predominantly than the second resin. In this case, as the heating device, for example, a warm air heating device or an infrared heating device can be appropriately used.

Fig. 3 is a schematic diagram illustrating a composite material precursor 30 an example of a composite material according to an embodiment of the present invention that is formed through the steps including up to the magnetic field heating step S14 of Fig. 1. As illustrated in Fig. 3, the composite material precursor 30 includes magnetic field circuit forming materials 32A and 32B as the first material and a magnetic field circuit non-forming material 34 as the second material. The magnetic field circuit forming materials 32A and 32B and the magnetic field circuit non-forming material 34 are joined along the Z-axis direction as a longitudinal direction by being disposed along the longitudinal direction and assembled. The composite material precursor 30 has a shape in which the magnetic field circuit forming materials 32A and 32B and the magnetic field circuit non-forming material 34 are joined along the longitudinal direction. Therefore, only the portion where the magnetic field circuit forming materials 32A and 32B are disposed has a shape where it is not likely to be heated even when a magnetic field, an electric field, an electromagnetic wave, or the like is applied thereto.

The magnetic field circuit forming material 32A is formed by allowing the magnetic field circuit forming material 12A to pass through the magnetic field heating step S14 such that the first resin included in the magnetic field circuit forming material 12A reacts. The magnetic field circuit forming material 32B is formed by allowing the magnetic field circuit forming material 12B to pass through the magnetic field heating step S14 such that the first resin included in the magnetic field circuit forming material 12B reacts. The magnetic field circuit non-forming material 34 is formed when the magnetic field circuit non-forming material 14 is joined to the end surface of the magnetic field circuit forming material 12B on the second side through the magnetic field heating step S14 while the second resin included in the magnetic field circuit non-forming material 14 is less likely to react than the first resin included in the magnetic field circuit forming materials 12A and 12B.

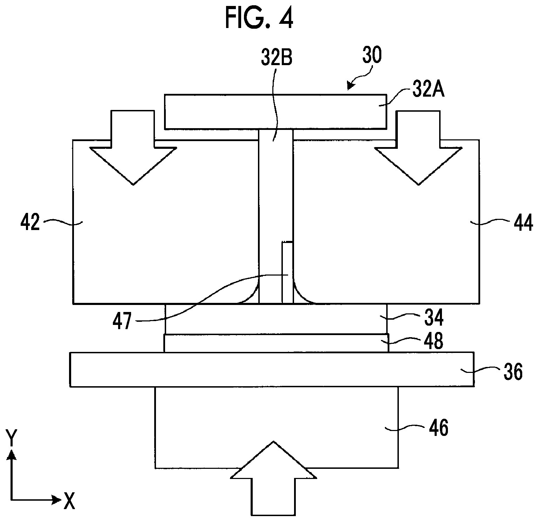

Although the composite material precursor 30 has the above-described shape, this way, the first resin included in the magnetic field circuit forming materials 32A and 32B reacts predominantly once, and the second resin included in the magnetic field circuit non-forming material 34 is less likely to react. Therefore, the composite material precursor 30 can be easily used in a state where the magnetic field circuit forming materials 32A and 32B and the magnetic field circuit non-forming material 34 are joined to another member 36 (refer to Fig. 4) in the portion of the magnetic field circuit non-forming material 34 where the second resin is less likely to react than the first resin included in the magnetic field circuit forming materials 32A and 32B. When the composite material is used for an aircraft, the composite material precursor 30 is a stringer, a frame, or a shear tie, the member 36 (refer to Fig. 4) different from the magnetic field circuit forming materials 32A and 32B and the magnetic field circuit non-forming material 34 is a fuselage skin of an aircraft body.

Fig. 4 is a diagram illustrating the electric field heating preparation step S15 and an electric field heating step S16. In the second heating preparation step, the heat generating material is disposed in the second material to heat the second material under a condition where the second resin reacts more predominantly than the first resin. In the electric field heating preparation step S15 as the second heating preparation step, as shown in Fig. 4, electromagnetic field heat generating bodies 47 and 48 such as metal as the heat generating material are disposed in the magnetic field circuit non-forming material 34 as the second material to apply an electric field to the magnetic field circuit non-forming material 34 for heating. As a result, the second resin included in the magnetic field circuit non-forming material 34 reacts more predominantly than the first resin included in the magnetic field circuit forming materials 32A and 32B. Here, the electromagnetic field heat generating bodies 47 and 48 such as metal are the same as the electromagnetic field heat generating body such as metal described as an example of the heat generating body, and thus the detailed description will not be made.

In the electric field heating preparation step S15, specifically, as illustrated in Fig. 4, the electromagnetic field heat generating body 48 such as metal is disposed in a region between the magnetic field circuit non-forming material 34 and the member 36 different from the magnetic field circuit forming materials 32A and 32B and the magnetic field circuit non-forming material 34. As a result, when the electromagnetic field heat generating body 48 such as metal applies an electric field to a surface of the magnetic field circuit non-forming material 34 facing the member 36 in the electric field heating step S16 described below, heat can be generated.

In addition, in the electric field heating preparation step S15, it is preferable that the electromagnetic field heat generating body 47 such as metal is disposed in a region around an end surface of the magnetic field circuit forming material 32B on the second side in the Y-axis direction that is joined to the magnetic field circuit non-forming material 34. As a result, when the electromagnetic field heat generating body 47 such as metal applies an electric field to the region around the end surface of the magnetic field circuit forming material 32B on the second side in the Y-axis direction that is joined to the magnetic field circuit non-forming material 34 in the electric field heating step S16 described below, heat can be generated.

The details of the second heating preparation step vary depending on the heating form of the second heating step that is subsequently performed. For example, when the heating form of the second heating step is heating by a magnetic field, a heat generating material that generates heat when a magnetic field is applied thereto is disposed in the second heating preparation step. In addition, when the heating form of the second heating step is heating by an electromagnetic wave, a heat generating material that generates heat when irradiated with an electromagnetic wave is disposed in the second heating preparation step.

In addition, when the respective heating forms of the first heating step and the second heating step described below are different from each other, in the first material preparation step and the second material preparation step, the first resin can be caused to react more predominantly than the second resin in the heating form relating to the first heating step, and the second resin can be caused to react more predominantly than the first resin in the heating form relating to the second heating step. In this case, the second heating preparation step may be included in the first material preparation step and the second material preparation step. In this form, for example, when the heating form of the first heating step is heating by application of a magnetic field, application of an electric field, or irradiation of an electromagnetic wave and when the heating form of the second heating step is heating by a difference in reaction temperature between the first resin and the second resin, the first material and the second material are prepared such that a heat generating mechanism or a heat generating body that generates heat by a magnetic field, an electric field, or an electromagnetic wave is provided in the first material in advance, a heat generating mechanism or a heat generating body that generates heat by a magnetic field, an electric field, or an electromagnetic wave is not provided in the second material, and the reaction temperature of the second resin is lower than the reaction temperature of the first resin. In addition, when the heating form of the first heating step is heating by any one of application of a magnetic field, application of an electric field, and irradiation of an electromagnetic wave and when the heating form of the second heating step is heating by any one of application of a magnetic field, application of an electric field, and irradiation of an electromagnetic wave and is different from the heating form of the first heating step, the first material and the second material are prepared such that a heat generating mechanism or a heat generating body that generates heat by the heating form of the first heating step is provided in the first material in advance and a heat generating mechanism or a heat generating body that generates heat by the heating form of second heating step is provided in the second material in advance.

In the second heating step, the second material is processed along a member different from the first material and the second material to join the second material to the member by heating the second material in which the heat generating material is disposed in the second heating preparation step under a condition where the second resin reacts more predominantly than the first resin such that the second resin reacts more predominantly than the first resin. In the electric field heating step S16 as the second heating step, the magnetic field circuit non-forming material 34 is processed along the member 36 different from the magnetic field circuit forming materials 32A and 32B and the magnetic field circuit non-forming material 34 to join the magnetic field circuit non-forming material 34 to the member 36 by applying an electric field for heating to the magnetic field circuit non-forming material 34 as the second material in which the electromagnetic field heat generating bodies 47 and 48 such as metal as the heat generating material are disposed in the electric field heating preparation step S15 as the second heating preparation step as the above-described condition such that the second resin included in the magnetic field circuit non-forming material 34 reacts more predominantly than the first resin included in the magnetic field circuit forming materials 32A and 32B as the first material.

In the electric field heating step S16, as illustrated in Fig. 4, pressure heating devices 42, 44, and 46 that apply an electric field for heating while pressurizing the magnetic field circuit non-forming material 34 are used. In the electric field heating step S16, specifically, as illustrated in Fig. 4, the pressure heating device 42 applies an electric field for heating while interposing the first side (in Fig. 4, the left side) of the magnetic field circuit non-forming material 34 with respect to the magnetic field circuit forming material 32B between the pressure heating device 42 and the pressure heating device 46 for pressurization. In addition, in the electric field heating step S16, the pressure heating device 44 applies an electric field for heating while interposing the second side (in Fig. 4, the right side) of the magnetic field circuit non-forming material 34 with respect to the magnetic field circuit forming material 32B between the pressure heating device 44 and the pressure heating device 46 for pressurization. Further, in the electric field heating step S16, the pressure heating device 42 and the pressure heating device 44 applies an electric field for heating while interposing a region around the end surface of the magnetic field circuit forming material 32B on the second side in the Y-axis direction that is joined to the magnetic field circuit non-forming material 34, that is, a region where the electromagnetic field heat generating body 47 such as metal is disposed between the pressure heating device 42 and the pressure heating device 44 for pressurization.

In the electric field heating step S16, the pressure heating devices 42, 44, and 46 applies an electric field such that the electromagnetic field heat generating bodies 47 and 48 such as metal disposed in the electric field heating preparation step S15 generates heat. As a result, in the electric field heating step S16, the second resin included in the magnetic field circuit non-forming material 34 that is disposed in contact with the electromagnetic field heat generating body 48 such as metal reacts such that the surface of the magnetic field circuit non-forming material 34 facing the member 36 is deformed according to the shape of the surface of the member 36 facing the magnetic field circuit non-forming material 34 and joined to the member 36.

Further, in the electric field heating step S16, the first resin included in the portion of the magnetic field circuit forming material 32B that is disposed in contact with the electromagnetic field heat generating body 47 such as metal reacts again such that the joining with the magnetic field circuit non-forming material 34 that is deformed according to the shape of the surface of the member 36 facing the magnetic field circuit non-forming material 34 can be stably formed with higher strength.

It is preferable that the pressure heating devices 42, 44, and 46 have the same configuration as the above-described pressure heating devices 22, 24, and 26.

In the electric field heating step S16, by causing the second resin included in the magnetic field circuit non-forming material 34 to react more predominantly than the first resin included in the magnetic field circuit forming materials 32A and 32B using the electromagnetic field heat generating body 48 such as metal, the portion where the electromagnetic field heat generating body 47 such as metal is not provided can be maintained in a state where the first resin included in the magnetic field circuit forming materials 32A and 32B is less likely to react than the second resin included in the magnetic field circuit non-forming material 34. Further, in the electric field heating step S16, only the heated portion has to be pressurized. For example, as in the rectangular shape of the pressure heating devices 42, 44, and 46, a mold relating to forming can be simplified.

In the electric field heating step S16, the first resin included in the magnetic field circuit forming materials 32A and 32B is less likely to be heated than the second resin included in the magnetic field circuit non-forming material 34 except for the portion that is heated by heat generated from the electromagnetic field heat generating body 47 such as metal. Therefore, in the electric field heating step S16, for example, the shape of the magnetic field circuit forming materials 32A and 32B is not likely to collapse, and the shape can be stably maintained.

The details of the second heating step vary depending on the heating form determined in the second heating preparation step. For example, in the second heating step, depending on the heat generating material disposed in the second heating preparation step, a magnetic field may be applied, an electric field may be applied, or an electromagnetic wave may be irradiated. In these cases, in the second heating step, as a heating device, a magnetic field application device that applies a magnetic field, an electric field application device that applies an electric field, or an electromagnetic wave irradiation device that irradiates an electromagnetic wave can be appropriately used depending on the respective heating forms. In addition, depending on the heating form of the second heating step, for example, a warm air heating device or an infrared heating device can be appropriately used.

In the embodiment, the case where the magnetic field heating step S14 is adopted as the first heating step and the electric field heating step S16 is adopted as the second heating step has been mainly described, but the present invention is not limited thereto. The heating forms of the first heating step and the second heating step may be the same. In this case, it is preferable that the second heating preparation step is favorably performed such that conditions such as the intensities a magnetic field, an electric field, and an electromagnetic wave and the heating temperature in the heating form of the second heating step have a weaker effect than conditions such as the intensities a magnetic field, an electric field, and an electromagnetic wave and the heating temperature in the heating form of the first heating step. In this case, in the second heating step, the first resin that reacts predominantly in the first heating step can be inhibited from reacting again.

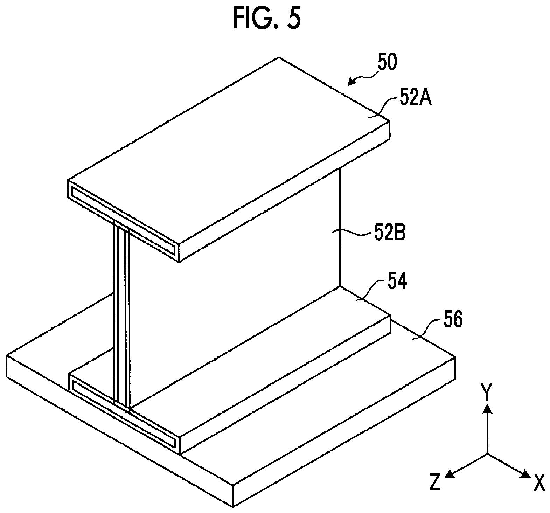

Fig. 5 is a schematic diagram illustrating a composite material 50 as an example of the composite material according to the embodiment of the present invention that is formed through the steps including up to the electric field heating step S16 of Fig. 1. As illustrated in Fig. 5, the composite material 50 includes magnetic field circuit forming materials 52A and 52B as the first material, a magnetic field circuit non-forming material 54 as the second material, and another member 56. The magnetic field circuit forming materials 52A and 52B, the magnetic field circuit non-forming material 54, and the member 56 are joined along the Z-axis direction as a longitudinal direction by being disposed along the longitudinal direction and assembled. The composite material 50 has a shape in which the magnetic field circuit forming materials 52A and 52B, the magnetic field circuit non-forming material 54, and the member 56 are joined along the longitudinal direction. Therefore, only the portion where the magnetic field circuit forming materials 52A and 52B are disposed has a shape where it is not likely to be heated even when a magnetic field, an electric field, an electromagnetic wave, or the like is applied thereto.

The magnetic field circuit forming material 52A is formed when the magnetic field circuit forming material 32A passes through the electric field heating step S16 such that the joining between the shape of the magnetic field circuit forming material 32A and the magnetic field circuit forming material 32B is maintained while the first resin included in the magnetic field circuit forming material 32A is less likely to react again than the second resin included in the magnetic field circuit non-forming material 34. In the magnetic field circuit forming material 52B, a portion where the electromagnetic field heat generating body 47 such as metal is not formed in the electric field heating preparation step S15 is formed when the magnetic field circuit forming material 32B passes through the electric field heating step S16 such that the joining between the shape of the magnetic field circuit forming material 32B and the magnetic field circuit forming material 32A is maintained while the first resin included in the magnetic field circuit forming material 32B is less likely to react again than the second resin included in the magnetic field circuit non-forming material 34. In the magnetic field circuit forming material 52B, a portion where the electromagnetic field heat generating body 47 such as metal is provided in the electric field heating preparation step S15 is formed when the magnetic field circuit forming material 32B passes through the electric field heating step S16 such that the first resin included in the magnetic field circuit forming material 32B reacts again, the shape of the magnetic field circuit forming material 32B is improved, and the joining between the magnetic field circuit forming material 32B and the magnetic field circuit non-forming material 34 is improved. For example, in the magnetic field circuit forming material 52B, in the portion where the electromagnetic field heat generating body 47 such as metal is provided in the electric field heating preparation step S15, the first resin included in the magnetic field circuit forming material 32B and the second resin included in the magnetic field circuit non-forming material 34 are mixed through the reaction such that the shape and the joining are improved as described above.

The magnetic field circuit non-forming material 54 is formed when the magnetic field circuit non-forming material 34 passes through the electric field heating step S16 such that the second resin included in the magnetic field circuit non-forming material 34 reacts more predominantly than the first resin included in the magnetic field circuit forming materials 32A and 32B, the joining with the magnetic field circuit forming material 32B is improved, and the magnetic field circuit non-forming material 34 is formed according to the shape of the member 36 and is joined to the member 36. The member 56 is formed when the member 36 passes through the electric field heating step S16 such that the second resin included in the magnetic field circuit non-forming material 34 reacts as described above and the magnetic field circuit non-forming material 34 is joined to the member 36.

Although the composite material 50 has the above-described shape, this way, most part of the first resin included in the magnetic field circuit forming materials 52A and 52B and the second resin included in the magnetic field circuit non-forming material 54 react predominantly only once. Therefore, in the composite material 50, by causing the second resin included in the magnetic field circuit non-forming material 54 to react more predominantly than the first resin included in the magnetic field circuit forming materials 52A and 52B in a state where most part of the first resin included in the magnetic field circuit forming materials 52A and 52B is inhibited from reacting predominantly again, the magnetic field circuit non-forming material 54 can be joined to the member 56.

The composite material forming method and the composite material precursor 30 according to the embodiment has the above-described configuration. Therefore, by performing heating under a predetermined condition using the first material including the first resin that reacts under the predetermined condition and the second material including the second resin that is less likely to react under the predetermined condition, the first resin reacts more predominantly than the second resin, and the state where the second resin is less likely to react can be maintained. Therefore, regarding the composite material forming method and the composite material precursor 30 according to the embodiment, the composite material that is formed by causing the first resin to react can be easily used in a state where it is joined to another member in the portion of the second material including the second resin. Further, regarding the composite material forming method and the composite material precursor 30 according to the embodiment, only the heated portion has to be pressurized, and thus a mold relating to forming can be simplified.

In addition, regarding the composite material forming method and the composite material precursor 30 according to the embodiment, the magnetic field circuit forming materials 12A and 12B in which a magnetic field circuit is formed are prepared as the first material, the magnetic field circuit non-forming material 14 in which a magnetic field circuit is not formed is prepared as the second material, and a magnetic field is applied for heating as the condition where the first resin reacts more predominantly than the second resin. Therefore, with the composite material forming method and the composite material precursor 30 according to the embodiment, by applying a magnetic field for heating to the magnetic field circuit forming materials 12A and 12B that is heated by the magnetic field and the magnetic field circuit non-forming material 14 that is not heated by the magnetic field such that the first resin included in the magnetic field circuit forming materials 12A and 12B reacts more predominantly than the second resin included in the magnetic field circuit non-forming material 14, a state where the second resin included in the magnetic field circuit non-forming material 14 is less likely to react can be favorably maintained. Therefore, regarding the composite material forming method and the composite material precursor 30 according to the embodiment, the composite material that is formed by causing the first resin to react can be easily used in a state where it is joined to another member in the portion of the magnetic field circuit non-forming material 14 including the second resin. Further, regarding the composite material forming method and the composite material precursor 30 according to the embodiment, only the heated portion has to be pressurized, and thus a mold relating to forming can be simplified.

Regarding the composite material forming method and the composite material 50 according to the embodiment, the heat generating material is disposed in the second material such that heating can be performed under a condition where the second resin reacts more predominantly than the first resin. Next, the second material in which the heat generating material is disposed is heated under a condition where the second resin reacts more predominantly than the first resin. As a result, by causing the second resin included in the second material to react more predominantly than the first resin included in the first material in a state where the first resin included in the first material is less likely to react, the second material can be joined to another member. Therefore, regarding the composite material forming method and the composite material 50 according to the embodiment, the composite material that is formed by causing the first resin to react can be more easily used in a state where it is joined to another member in the portion of the second material including the second resin. Further, regarding the composite material forming method and the composite material 50 according to the embodiment, only the heated portion has to be pressurized, and thus a mold relating to joining to another member can be simplified.

In addition, regarding the composite material forming method and the composite material 50 according to the embodiment, the electromagnetic field heat generating bodies 47 and 48 such as metal are disposed as the heat generating material, and an electric field is applied for heating as the condition where the second resin reacts more predominantly than the first resin. Therefore, regarding the composite material forming method and the composite material 50 according to the embodiment, the electromagnetic field heat generating bodies 47 and 48 such as metal are disposed in the magnetic field circuit non-forming material 34, and an electric field is applied for heating. As a result, by causing the second resin included in the magnetic field circuit non-forming material 34 to react more predominantly than the first resin included in the magnetic field circuit forming materials 32A and 32B in a state where the first resin included in the magnetic field circuit forming materials 32A and 32B is less likely to react, the magnetic field circuit non-forming material 34 can be favorably joined to the member 36. Therefore, regarding the composite material forming method and the composite material 50 according to the embodiment, the composite material that is formed by causing the first resin to react can be easily used in a state where it is joined to the member 36 in the portion of the magnetic field circuit non-forming material 34 including the second resin. Further, regarding the composite material forming method and the composite material 50 according to the embodiment, only the heated portion has to be pressurized, and thus a mold relating to joining to another member can be simplified.

Regarding the composite material forming method, the composite material precursor 30, and the composite material 50 according to the embodiment, the reaction temperature of the second resin is higher than that of the first resin, and heating is performed at a temperature that is higher than or equal to the reaction temperature of the first resin and lower than the reaction temperature of the second resin in order to form the composite material precursor 30. Regarding the composite material forming method, the composite material precursor 30, and the composite material 50 according to the embodiment, heating is further performed under a condition where the first resin reacts more predominantly than the second resin, for example, a magnetic field is applied for heating. As a result, by causing the first resin included in the magnetic field circuit forming materials 12A and 12B as the first material to react more predominantly than the second resin included in the magnetic field circuit non-forming material 14 as the second material, a state where the second resin included in the magnetic field circuit non-forming material 14 as the second material is less likely to react than the first resin included in the magnetic field circuit forming materials 12A and 12B as the first material can be easily maintained. Therefore, regarding the composite material forming method, the composite material precursor 30, and the composite material 50 according to the embodiment, the composite material precursor 30 that is formed by causing the first resin to react can be easily used in a state where it is joined to the member 36 in the portion of the magnetic field circuit non-forming material 34 as the second material including the second resin.

Regarding the composite material forming method, the composite material precursor 30, and the composite material 50 according to the embodiment, the magnetic field circuit forming materials 12A and 12B as the first material and the magnetic field circuit non-forming material 14 as the second material are disposed along the longitudinal direction and assembled. Therefore, regarding the composite material forming method, the composite material precursor 30, and the composite material 50 according to the embodiment, the composite material precursor 30 that is formed by causing the first resin to react can be easily used in a state where it is joined to the member 36 in the portion of the magnetic field circuit non-forming material 34 as the second material including the second resin, and a mold relating to forming can be simplified, the composite material precursor 30 having a shape in which it is difficult to apply a magnetic field for heating to only the portion in which the magnetic field circuit forming materials 12A and 12B as the first material including the first resin are disposed.

### Reference Signs List

12A, 12B, 32A, 32B, 52A, 52B: magnetic field circuit forming material
14, 34, 54: magnetic field circuit non-forming material
22, 24, 26, 42, 44, 46: pressure heating device
30: composite material precursor
36, 56: member
47, 48: electromagnetic field heat generating body such as metal
50: composite material

## Claims

1. A composite material forming method comprising:
a first material preparation step of preparing a first material including a first reinforcing fiber and a first resin;
a second material preparation step of preparing a second material including a second reinforcing fiber and a second resin;
a material assembly step of assembling the first material and the second material to each other, and
a first heating step of joining the first material and the second material to each other by heating the first material and the second material assembled in the material assembly step under a condition where the first resin reacts more predominantly than the second resin such that the first resin reacts more predominantly than the second resin.

2. The composite material forming method according to claim 1,
wherein the first material preparation step is a magnetic field circuit forming material preparation step of preparing a magnetic field circuit forming material in which a magnetic field circuit is formed as the first material,
the second material preparation step is a magnetic field circuit non-forming material preparation step of preparing a magnetic field circuit non-forming material in which a magnetic field circuit is not formed as the second material, and
the first heating step is a magnetic field heating step of applying a magnetic field for heating as the condition where the first resin reacts more predominantly than the second resin.

3. The composite material forming method according to claim 1, further comprising:
a second heating preparation step of disposing a heat generating material in the second material to heat the second material under a condition where the second resin reacts more predominantly than the first resin; and
a second heating step of processing the second material along a member different from the first material and the second material to join the second material to the member by heating the second material in which the heat generating material is disposed in the second heating preparation step under a condition where the second resin reacts more predominantly than the first resin such that the second resin reacts more predominantly than the first resin.

4. The composite material forming method according to claim 3,
wherein the first material preparation step is a magnetic field circuit forming material preparation step of preparing a magnetic field circuit forming material in which a magnetic field circuit is formed as the first material,
the second material preparation step is a magnetic field circuit non-forming material preparation step of preparing a magnetic field circuit non-forming material in which a magnetic field circuit is not formed as the second material,
the first heating step is a magnetic field heating step of applying a magnetic field for heating as the condition where the first resin reacts more predominantly than the second resin,
the second heating preparation step is an electric field heating preparation step of disposing an electromagnetic field heat generating body such as metal as the heat generating material to apply an electric field for heating as the condition where the second resin reacts more predominantly than the first resin, and
the second heating step is an electric field heating step of applying an electric field for heating as the condition where the second resin reacts more predominantly than the first resin.

5. The composite material forming method according to any one of claims 1 to 4,
wherein in the second material preparation step, the second material including the second resin having a higher reaction temperature than the first resin is prepared, and
in the first heating step, the first material and the second material are heated at a temperature that is higher than or equal to the reaction temperature of the first resin and lower than the reaction temperature of the second resin.

6. The composite material forming method according to any one of claims 1 to 5,
wherein in the material assembly step, the first material and the second material are disposed along a longitudinal direction and assembled.

7. A composite material comprising:
a first material including a first reinforcing fiber and a first resin; and
a second material including a second reinforcing fiber and a second resin,
wherein a condition where the first resin reacts more predominantly than the second resin is satisfied, and
the first material and the second material are joined along a longitudinal direction by being disposed along the longitudinal direction and assembled.

8. The composite material according to claim 7,
wherein the first material is a magnetic field circuit forming material in which a magnetic field circuit is formed, and
the second material is a magnetic field circuit non-forming material in which a magnetic field circuit is not formed.

9. A composite material comprising:
a first material including a first reinforcing fiber and a first resin;
a second material including a second reinforcing fiber and a second resin; and
a member different from the first material and the second material,
wherein a condition where the first resin reacts more predominantly than the second resin is satisfied,
the first material and the second material are joined along a longitudinal direction by being disposed along the longitudinal direction and assembled, and
the second material and the member are joined along the longitudinal direction.

10. The composite material according to claim 9,
wherein the first material is a magnetic field circuit forming material in which a magnetic field circuit is formed, and
the second material is a magnetic field circuit non-forming material in which a magnetic field circuit is not formed.
